# EUROPEAN PATENT APPLICATION

(11) **EP 1 517 520 A2**
(43) Date of publication of application: **23.03.2005**
(21) Application number: 04021811.7
(22) Date of filing: 14.09.2004
(51) Int. Cl.: H04M 1/02

(54) **Slide-type mobile communication terminal**

(30) Priority: 16.09.2003 KR 2003064005
(71) Applicant: SK Teletech Co., Ltd., Seoul 135-984 (KR)
(72) Inventor: Park, Hyung-Hoon, Seoul 133-170 (KR)
(74) Representative: Liesegang, Eva

(57) **Abstract**

Disclosed herein is a slide-type mobile communication terminal, which drives a cover, combined with a top surface of a body to be capable of performing a sliding motion, to be automatically placed at a fully opened position or fully closed position. The slide-type mobile communication terminal of the present invention includes a body and a cover. The mobile communication terminal includes an opening and closing means having a motor that is provided with a screw shaft as a rotation shaft, having screw threads formed on an outer circumference thereof and having a length equal to or longer than the opening/closing distance of the cover, and is fitted into the top surface of the body to allow the longitudinal direction of the screw shaft to be parallel to the opening/closing direction of the cover. The opening and closing means has a transfer element that is provided with a slide projection formed on a bottom surface of the transfer element to be engaged with the screw thread. The transfer element is attached to the cover to allow the slide projection to be engaged with the screw thread and is moved in the longitudinal direction of the screw shaft with the rotation of the screw shaft. Further, the slide-type mobile communication terminal includes a signal input unit for generating an operation signal depending on the manipulation of the user.

## Description

### BACKGROUND OF THE INVENTION

### Field of the Invention

The present invention relates, in general, to slide-type mobile communication terminals and, more particularly, to a slide-type mobile communication terminal, which drives a cover, combined with a top surface of a body to be capable of performing a sliding motion, to be automatically placed at a fully opened position or fully closed position.

### Description of the Related Art

With the gradual and international popularization of mobile communication terminals, terminals having various functions and designs to meet users' requirements have been marketed. The terminals have been developed from typical bar-type terminals, flip-type terminals and flip-up terminals to folder-type terminals, etc. Recently, folder-type terminals have been broadly generalized, which is due to the fact that each of the folder-type terminals has a sufficient spatial margin to adapt a wide Liquid Crystal Display (LCD) module as a display device, and is more portable than other terminals because a user carries the folder-type terminal with the folder-type terminal folded in half.

In the meantime, a mobile terminal capable of being equipped with a wide LCD module having a size similar to that of the above-described folder-type terminal and contributing to the miniaturization of a mobile terminal has been proposed. That is, this type of terminal is a terminal in which a cover is slidably opened by a certain length on the body of a mobile terminal in the longitudinal direction of the terminal, and which has an advantage in that it can better meet users' changing preferences compared to other conventional folder-type terminals.

Such a slide-type terminal can be constructed so that a sliding body is slidably opened downward or upward by about 1/2 of the length of the body around the body (this length is limited to 1/2 for the stability of the operation of the terminal, but it can vary to further open the sliding body). A 3×4 keypad assembly can be mounted on the body, and a display device can be installed on the front surface of the body.

The cover can be guided on the body by a predetermined guiding means. At this time, a guide rib is typically formed on the cover or body, and a guide slit is formed on a location of the remaining part of the cover or body corresponding to the guide rib, thus performing a sliding operation. Further, a stopper means is installed or formed on a portion where the cover is slid and fully opened or closed, thus preventing the cover from undesirably moving on the body.

However, the above-described slide-type terminal equipped with the guide means and stopper means is limited in that the position of the cover can be fixed only when the cover is fully opened or closed on the body.

Therefore, if the cover is undesirably moved during an opening or closing operation, an undesirable malfunction of the terminal may be caused. Further, there is inconvenience in that, when the cover is required to be opened or closed, the cover must be pushed to an end portion until the cover is caught and secured by the stopper.

### SUMMARY OF THE INVENTION

Accordingly, the present invention has been made keeping in mind the above problems occurring in the prior art, and an object of the present invention is to provide a slide-type mobile communication terminal, which allows a cover of the terminal to be automatically placed at a fully opened or closed position even though a user does not personally push the cover, and prevents the cover from undesirably moving during an opening or closing operation.

In order to accomplish the above object, the present invention provides a slide-type mobile communication terminal, comprising a body; a cover combined with a top surface of the body to be capable of performing a sliding motion; opening and closing means including a motor that is provided with a screw shaft having screw threads formed on an outer circumference thereof as a rotation shaft and is fitted into to the top surface of the body, and a transfer element that is provided with a slide projection formed on a bottom surface of the transfer element to be engaged with the screw thread, the transfer element being attached to the cover to allow the slide projection to be engaged with the screw thread and transferring in a longitudinal direction of the screw shaft with the rotation of the screw shaft; a signal input unit for generating an operation signal when an external force is applied; and a control unit for receiving the operation signal generated from the signal input unit and driving the motor.

Preferably, the opening and closing means may further comprise a guide plate formed lengthwise to have a length capable of covering a top surface of the screw shaft, interposed between the screw shaft and the transfer element, and provided with a guide slot-formed lengthwise in the longitudinal direction of the screw shaft to have a size such that the slide projection penetrates through the guide slot.

Preferably, the slide-type mobile communication terminal may further comprise sensing means for sensing whether the cover is opened or closed, the sensing means generating an opened position signal indicating that the cover is opened when the cover is opened, applying the opened position signal to the control unit, generating a closed position signal indicating that the cover is closed when the cover is closed, and applying the closed position signal to the control unit. In this case, the control unit may be operated so that, if the operation signal is input while the opened position signal is input, the control unit drives the motor to allow the transfer element to be transferred in a closing direction of the cover until the closed position signal is input, while if the operation signal is input while the closed position signal is input, the control unit drives the motor to allow the transfer element to be transferred in an opening direction of the cover until the opened position signal is input.

Preferably, the position sensing means may comprise a magnet attached to a bottom surface of the cover and adapted to emit magnetic energy, a first magnetic sensor attached to a location on the top surface of the body corresponding to the magnet when the cover is closed, and adapted to generate the closed position signal when sensing magnetic energy, and a second magnetic sensor attached to a location on the top surface of the body corresponding to the magnet when the cover is opened, and adapted to generate the opened position signal when sensing magnetic energy.

Preferably, the position sensing means may comprise a light emitting unit attached to the bottom surface of the cover and adapted to emit light, a first photosensitive unit attached to a location on the top surface of the body corresponding to the light emitting unit when the cover is closed, and adapted to generate the closed position signal when sensing light, and a second photosensitive unit attached to a location on the top surface of the body corresponding to the light emitting unit when the cover is opened, and adapted to generate the opened position signal when sensing light.

Preferably, the signal input unit may be implemented with a switch button structure or a piezoelectric device for generating an operation signal and transmitting the operation signal to the control unit when pressure is externally applied. Moreover, the signal input unit may be implemented with a thermosensor for generating the operation signal and transmitting the operation signal to the control unit when external heat, such as the body temperature of a user, is sensed.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is an exploded view of a slide-type mobile communication terminal according to the present invention;
FIG. 2a is a perspective view of a slide module applied to the present invention;
FIG. 2b is a perspective view of an opening and closing means applied to the present invention;
FIG. 2c is a sectional view taken along line A-A of FIG. 2b;
FIG. 3a is a sectional view showing the location of a transfer element and magnetic sensors when a cover is closed; and
FIG. 3b is a sectional view showing the location of the transfer element and the magnetic sensors when the cover is opened.

### DESCRIPTION OF THE PREFERRED EMBODIMENTS

Hereinafter, embodiments of the present invention will be described in detail with reference to the attached drawings.

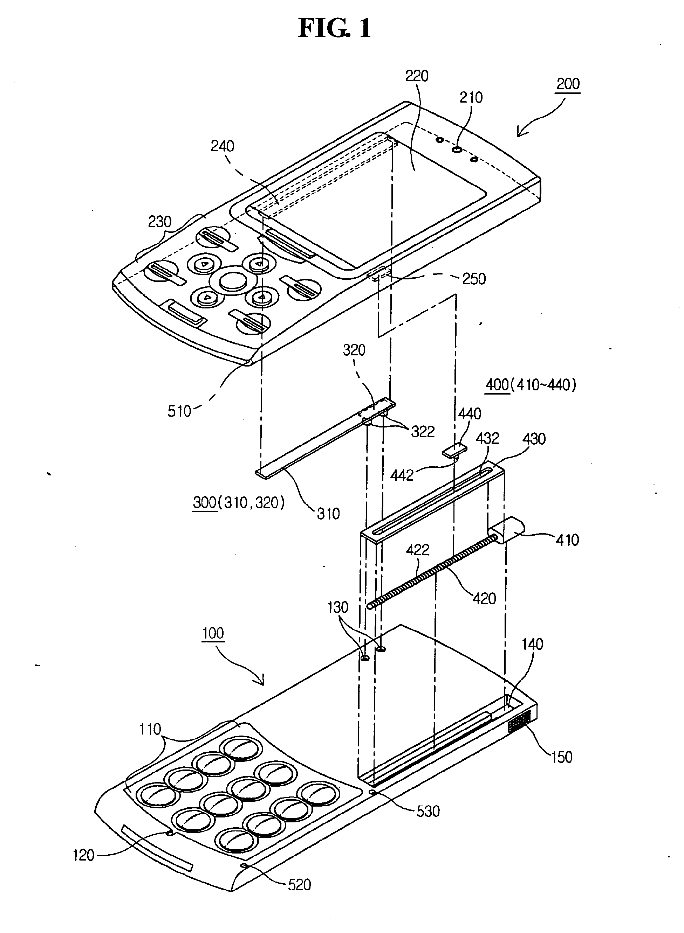

FIG. 1 is a perspective view of a slide-type mobile communication terminal according to the present invention.

As shown in FIG. 1, the slide-type mobile communication terminal according to the present invention includes a body 100 provided with a keypad 110 used to input numerals and various character signals and a transmission unit 120 used to transmit sounds, a cover 200 provided with an earpiece 210 used to output sounds, a LCD screen 220 used to output images and a plurality of functional keys 230 used to input special functional signals, a slide module 300 constructed to guide the sliding motion of the cover 200, and an opening and closing means 400 constructed to selectively open and close the cover 200.

The slide module 300 includes a slide rail 310 that is formed lengthwise in the opening/closing direction of the cover 200 and attached to the bottom surface of the cover 200, and a carrier 320 that is connected to the slide rail 310 in the longitudinal direction of the slide rail 310 to perform a sliding motion and is provided with attaching projections 322 projected downward from the slide rail 310 and fixedly attached to the body 100.

The opening and closing means 400 includes a motor 410 that is provided with a screw shaft 420 as a rotation shaft having screw threads 422, formed on an outer circumference thereof, and having a length equal to or longer than an opening/closing distance of the cover 200, and is fitted into the top surface of the body 100 to allow the longitudinal direction of the screw shaft 420 to be parallel to the opening/closing direction of the cover 200, and a transfer element 440 that is attached to a location of the bottom surface of the cover 200 corresponding to the attaching location of the screw shaft 420 when the cover 200 is closed and provided with a slide projection 442, the lower end of which is formed to be inserted into the screw thread 422.

In this case, the screw shaft 420 is preferably formed to have a length equal to or longer than the opening/closing distance of the cover 200 so that the cover 200 can be sufficiently opened or closed. The motor 410 is preferably fitted into the top surface of the body so that the longitudinal direction of the screw shaft 420 is parallel to the opening/closing direction of the cover 200.

A slide module attaching groove 240 and a transfer element attaching groove 250 formed to allow the slide module 300 and the transfer element 440 to be fitted thereinto, respectively, are formed in opposite side portions of the bottom surface of the cover 200.

Further, a guide plate 430 that is formed to have a length capable of covering the length of the screw shaft 420 and is provided with a guide slot 432, formed lengthwise in the longitudinal direction of the screw shaft 420 to have a size such that the slide projection 442 penetrates through the guide slot 432, is interposed between the screw shaft 420 and the transfer element 440.

The transfer element 440 fitted to allow the lower end of the slide projection 442 to be inserted into the screw thread 422 performs a rectilinear motion in the longitudinal direction of the screw shaft 420 along the guide slot 432 as the screw shaft 420 is rotated by the motor 410. Hereinafter, the fitting structure and operating principles of the transfer element 440 will be described in detail later with reference to additional drawings.

Further, on the top surface of the body 100, a depression-shaped opening and closing means seating groove 140 for allowing the opening and closing means 400 to be fitted thereinto is formed on a location where the opening and closing means 400 is to be seated. On the top surface of the body 100, attaching projection receiving holes 130 for receiving the attaching projections 322 therein and enabling a fixedly attaching structure and shape are formed at the locations of the top surface in which the attaching projections 322 are to be inserted.

Further, an opening and closing button 150 having a switch button structure to drive the motor 410 is formed on the side of the body 100 so as to selectively open and close the cover 200. When the user presses the opening and closing button 150 to drive the motor 410, the transfer element 440 performs a rectilinear motion in the longitudinal direction of the screw shaft 420, so that the cover 200 fixedly coupled to the transfer element 440 performs a sliding motion in an opening or closing direction. A position where the opening and closing button 150 is located is not limited to the side of the body 100 as shown in FIG. 1, but changed to various positions depending on the user's convenience.

The opening and closing button 150 applied to the embodiment of the present invention is implemented with a switch button structure in which a switch button is pressed by the user and then internal circuits thereof are connected to each other to generate an operation signal for the motor 410. However, the construction of the opening and closing button 150 is not limited to the embodiment, but can be applied to various structures. For example, for the opening and closing button 150, there can be used a button implemented using a piezoelectric device that generates a current when an external pressure is applied, or a thermosensor that senses applied heat and generates a signal when heat is externally applied, as in the case of the transfer of body temperature occurring when the user brings a part of the body into contact with the sensor.

Further, a magnet 510 emitting magnetic energy is provided on the bottom surface of the cover 200, and first and second magnetic sensors 520 and 530 sensing magnetic energy are provided on locations of the top surface of the body 100 corresponding to the magnet 510 when the cover 200 is closed and opened, respectively. If magnetic energy is sensed, the first magnetic sensor 520 generates a closed position signal indicating that the cover 200 is closed. Further, if magnetic energy is sensed, the second magnetic sensor 530 generates an opened position signal indicating that the cover 200 is opened.

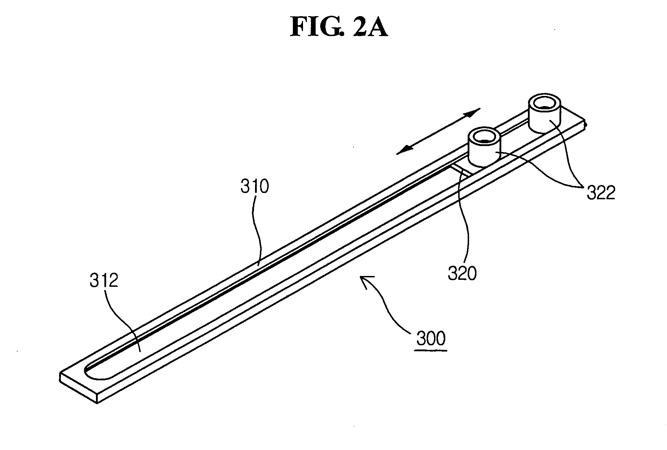

FIG. 2a is a perspective view of a slide module applied to the present invention and turned upside down with the attaching projections thereof facing upward.

As shown in FIG. 2a, a slide slot 312 formed lengthwise in a longitudinal direction is formed in the slide rail 310, and the carrier 320 is fitted into the slide slot 312 to allow the attaching projections 322 to project outward from the slide rail 310. Therefore, the carrier 320 can perform a sliding motion in the longitudinal direction of the slide slot 312 while remaining fitted into the slide slot 312. The attaching projections 322 are kept projected outward from the slide rail 310 regardless of the location of the carrier 320.

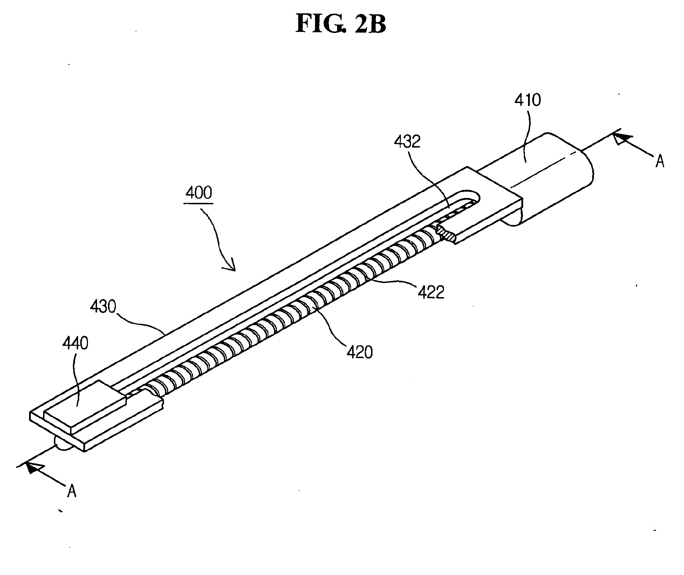

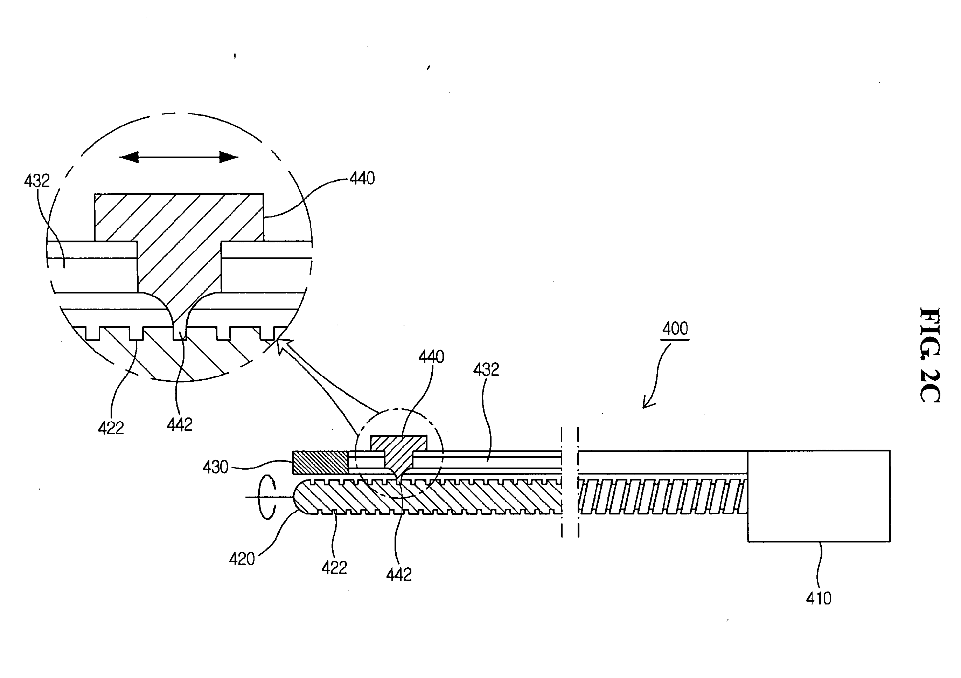

FIG. 2b is a perspective view of an opening and closing means applied to the present invention.

As shown in FIG. 2b, the transfer element 440 applied to the opening and closing means 400 includes the motor 410 for rotating the screw shaft 420 having the screw threads 422 formed on the outer circumference thereof, the guide plate 430 attached to be located on the screw shaft 420 along the longitudinal direction of the screw shaft 420, and the transfer element 440 constructed to be capable of performing a sliding motion in the longitudinal direction of the guide plate 430 while coming into contact with the guide plate 430 with the rotation of the screw shaft 420.

FIG. 2c is a sectional view taken along line A-A of FIG. 2b.

As shown in FIG. 2c, the slide projection 442 formed on the bottom of the transfer element 440 is engaged with the screw thread 422 formed on the outer circumference of the screw shaft 420 so that the slide projection 442 is inserted into the screw thread 422.

In this case, the slide projection 442 is engaged to be able to perform a sliding motion while being inserted into the screw thread 422, and the transfer element 440 is fitted into the guide plate 430 to be able to perform a sliding motion along the guide slot 432. Therefore, when the screw shaft 420 is rotated and the slide projection 442 performs a sliding motion along the screw thread 422, the transfer element 440 performs a rectilinear motion along the slide slot 312, and the cover 200 coupled to the transfer element 440 also performs a rectilinear motion.

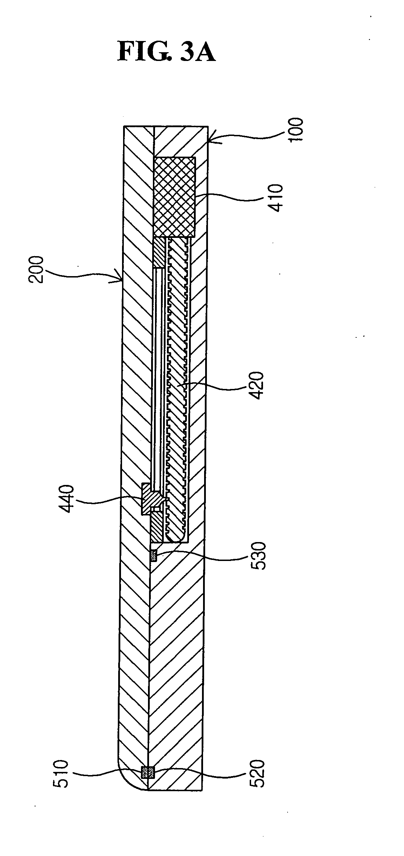

FIG. 3a is a sectional view showing the location of the transfer element and the magnetic sensors when the cover is closed.

As shown in FIG. 3a, if the cover 200 is closed, the transfer element 440 is located at the end of the screw shaft 420 opposite to the end coupled to the motor 410, and the magnet 510 is located on the first magnetic sensor 520. In this way, if the user inputs an operation signal through the signal input unit while magnetic energy is applied to the first magnetic sensor 520 from the magnet 510, the motor 410 rotates the screw shaft 420 so that the transfer element 440 performs a sliding motion in a direction moving toward the motor 410. As the transfer element 440 performs a sliding motion in the direction moving toward the motor 410, the cover 200 coupled to the transfer element 440 is opened to allow the top surface of the body 100 to be exposed outward.

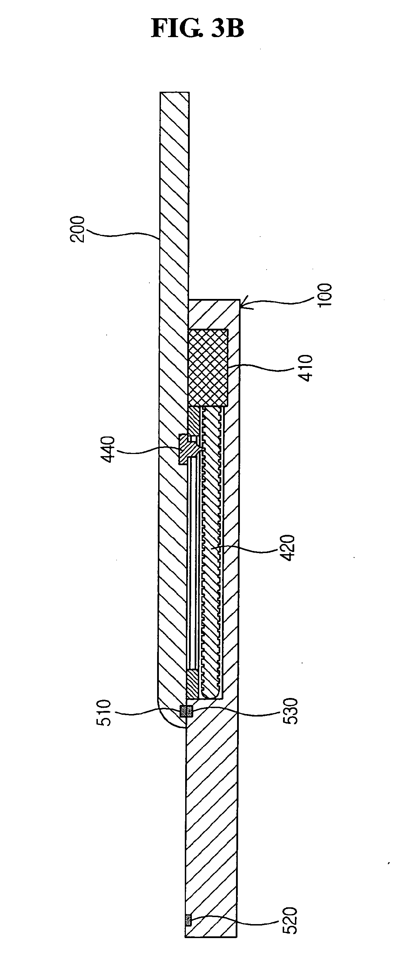

FIG. 3b is a sectional view showing the location of the transfer element and the magnetic sensors when the cover is opened.

As shown in FIG. 3b, if the cover 200 is fully opened, the transfer element 440 is located at the end of the screw shaft 420 coupled to the motor 410, and the magnet 510 is located on the second magnetic sensor 530.

If the opening motion of the cover 200 is performed until the cover is transited from the status of FIG. 3a to FIG. 3b, and then the magnet 510 is located on the second magnetic sensor 530, the second magnetic sensor 530 senses magnetic energy from the magnet 510 and generates an opened position signal indicating that the cover 200 is fully opened. When the opened position signal is generated, the motor 410 stops the rotation of the screw shaft 420, so that the cover 200 is stopped in a fully opened position.

Further, as shown in FIG. 3b, if the user inputs an operation signal through the signal input unit while magnetic energy is applied to the second magnetic sensor 530 from the magnet 510, the motor 410 rotates the screw shaft 420 so that the transfer element 440 performs a sliding motion in a direction moving away from the motor 410. As the transfer element 440 performs a sliding motion in the direction moving away from the motor 410, the cover 200 coupled to the transfer element 440 is moved in a closing direction.

When the cover 200 performs a closing motion and the magnet 510 is located on the first magnetic sensor 520, the first magnetic sensor 520 generates a closed position signal indicating that the cover 200 is fully closed. When the closed position signal is generated, the motor 410 stops the rotation of the screw shaft 420, so that the cover 200 is stopped in a fully closed position.

In the meantime, an example in which a magnet and magnetic sensors are used for a position sensing means is described above, but a light emitting diode and photosensors can be used instead of the magnet and the magnetic sensors. That is, for the position sensing means, there can be used a light emitting diode attached to the bottom surface of the cover to emit light, a first photosensor that is attached to a location on the top surface of the body corresponding to the light emitting diode, when the cover is closed, and is adapted to generate a closed position signal when sensing light, and a second photosensor that is attached to a location on the top surface of the body corresponding to the light emitting diode, when the cover is opened, and is adapted to generate an opened position signal when sensing light.

As described above, the present invention provides a slide-type mobile communication terminal, which is advantageous in that a user can automatically open and close a cover by utilizing the slide-type mobile communication terminal, thus greatly increasing the convenience of using the mobile communication terminal.

Further, the present invention is advantageous in that the construction of an opening and closing means for selectively opening and closing the cover is very simple, thus simplifying the manufacturing process of the mobile communication terminal, and decreasing manufacturing cost.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A slide-type mobile communication terminal, comprising:
a body;
a cover combined with a top surface of the body to be capable of performing a sliding motion;
opening and closing means including a motor that is provided with a screw shaft as a rotation shaft having screw threads formed on an outer circumference thereof and is fitted into the top surface of the body, and a transfer element that is provided with a slide projection formed on a bottom surface of the transfer element to be engaged with the screw thread, the transfer element being attached to the cover to allow the slide projection to be engaged with the screw thread and moved in a longitudinal direction of the screw shaft with the rotation of the screw shaft;
a signal input unit for generating an operation signal when an external force is applied; and
a control unit for receiving the operation signal generated from the signal input unit and driving the motor.

2. The slide-type mobile communication terminal according to claim 1, further comprising position sensing means for sensing whether the cover is opened or closed, the position sensing means generating an opened position signal indicating that the cover is opened when the cover is opened, applying the opened position signal to the control unit, generating a closed position signal indicating that the cover is closed when the cover is closed, and applying the closed position signal to the control unit; and
wherein the control unit is operated so that, if the operation signal is input while the opened position signal is input, the control unit drives the motor to allow the transfer element to be moved in a closing direction of the cover until the closed position signal is input, while if the operation signal is input while the closed position signal is input, the control unit drives the motor to allow the transfer element to be moved in an opening direction of the cover until the opened position signal is input.

3. The slide-type mobile communication terminal according to claim 2, wherein the position sensing means comprises:
a magnet attached to a bottom surface of the cover and adapted to emit magnetic energy;
a first magnetic sensor attached to a location on the top surface of the body corresponding to the magnet when the cover is closed, and adapted to generate the closed position signal when sensing magnetic energy; and
a second magnetic sensor attached to a location on the top surface of the body corresponding to the magnet when the cover is opened, and adapted to generate the opened position signal when sensing magnetic energy.

4. The slide-type mobile communication terminal according to claim 2, wherein the position sensing means comprises:
a light emitting unit attached to the bottom surface of the cover and adapted to emit light;
a first photosensitive unit attached to a location on the top surface of the body corresponding to the light emitting unit when the cover is closed, and adapted to generate the closed position signal when sensing light; and
a second photosensitive unit attached to a location on the top surface of the body corresponding to the light emitting unit when the cover is opened, and adapted to generate the opened position signal when sensing light.

5. The slide-type mobile communication terminal according to one of the preceding claims, wherein the opening and closing means further comprises a guide plate formed lengthwise to have a length capable of covering a length of the screw shaft, interposed between the screw shaft and the transfer element, and provided with a guide slot formed lengthwise in the longitudinal direction of the screw shaft to have a size such that the slide projection penetrates through the guide slot.

6. The slide-type mobile communication terminal according to one of the preceding claims, wherein the signal input unit is implemented with a switch button structure in which internal circuits are connected to each other to generate an operation signal for the motor when pressure is externally applied.

7. The slide-type mobile communication terminal according to one of claims 1 to 5, wherein the signal input unit is implemented to include a piezoelectric device for generating a current when pressure is externally applied.

8. The slide-type mobile communication terminal according to one of claims 1 to 5, wherein the signal input unit is implemented to include a thermosensor for generating the operation signal and transmitting the operation signal to the control unit when external heat is sensed.
